# EUROPÄISCHE PATENTSCHRIFT

(11) **EP 1 844 093 B1**
(45) Veröffentlichungstag und Bekanntmachung des Hinweises auf die Patenterteilung: **03.09.2008**
(21) Anmeldenummer: 06707787.5
(22) Anmeldetag: 23.01.2006
(51) Int. Cl.: C08J 9/40, C08J 9/42, C11D 17/04

(54) **MISCHUNGEN UND VERFAHREN ZUM REINIGEN VON OBERFLäCHEN**
MIXTURES AND METHOD FOR CLEANING SURFACES
MELANGES ET PROCEDE POUR NETTOYER DES SURFACES

(30) Priorität: 24.01.2005 DE 102005003308; 19.05.2005 DE 102005023801; 24.06.2005 DE 102005029745; 22.07.2005 DE 102005034977
(43) Veröffentlichungstag der Anmeldung: 17.10.2007
(73) Patentinhaber: BASF SE, 67056 Ludwigshafen (DE)
(72) Erfinder: MÖCK, Christof, 68259 Mannheim (DE); SCHORNICK, Gunnar, 67271 Neuleiningen (DE); FRENZEL, Stefan, 68161 Mannheim (DE); EHRENSTEIN, Moritz, 67063 Ludwigshafen (DE); BAUER, Ernst, Jürgen, 67069 Ludwigshafen (DE); ZIEMER, Antje, 68199 Mannheim (DE); SEELMANN-EGGEBERT, Hans-Peter, 67117 Limburgerhof (DE)
(86) Internationale Anmeldenummer: PCT/EP2006/050360
(87) Internationale Veröffentlichungsnummer: WO 2006/077253

(56) Entgegenhaltungen:
- DE-A1- 3 434 817
- DE-B- 1 282 953
- US-B1- 6 503 615

## Beschreibung

Die vorliegende Erfindung betrifft Mischungen, umfassend
(a) 0,1 bis 10 Gew.-% Stücke von offenzelligem Aminoplastschaumstoff mit einem mittleren Durchmesser im Bereich von 50 µm bis 5 mm (Gewichtsmittel)
(b) Wasser,
(c) insgesamt 1 bis 99,8 Gew.-% mindestens ein Tensid und
(d) gegebenenfalls bis 20 Gew.-% einer Öl- oder Fettphase,
wobei Angaben in Gew.-% auf die gesamte Mischung bezogen sind,
und ein Verfahren zur Herstellung von erfindungsgemäßen Mischungen.

Weiterhin betrifft die vorliegende Erfindung ein Verfahren zur Reinigung von Oberflächen unter Verwendung von Mischungen, umfassend
(a) 0,1 bis 10 Gew.-% Stücke von offenzelligem Aminoplastschaumstoff mit einem mittleren Durchmesser im Bereich von 50 µm bis 5 mm (Gewichtsmittel)
(b) Wasser,
(c) insgesamt 1 bis 99,8 Gew.-% mindestens ein Tensid und
(d) gegebenenfalls bis 20 Gew.-% einer Öl- oder Fettphase,
wobei Angaben in Gew.-% auf die gesamte Mischung bezogen sind.

Weiterhin betrifft die vorliegende Erfindung die Verwendung von erfindungsgemäßen Mischungen als Reinigungsmittel.

DE 3434817 offenbart ein Reinigungsmittel für textile Flächen, wherein aus einem pulverförmigen, porösen Trägermaterial aus eine aufgeschäumten, plastifizierten Harnstoff-Formaldehyd-Harzschaum besteht und mit Reinigungsmittel angereichert ist.

Das Reinigen von Oberflächen und dafür geeignete Reinigungsmittel sind von erheblicher wirtschaftlicher Bedeutung. Dabei kommt nicht nur die industrielle Reinigung in Betracht, sondern auch das Herstellen von Reinigungsmitteln, die für den industriellen und den privaten Sektor geeignet sind.

Von besonderer Bedeutung ist dabei die Körperreinigung einerseits, insbesondere die Reinigung von stark verschmutzten Körperteilen. So ist es beispielsweise schwierig, Schmierölreste vollständig von Händen zu entfernen, ohne dabei die Haut zu schädigen. Von spezieller Bedeutung sind die Oberflächen von Zähnen, die nach Möglichkeit vollständig von Belägen (Plaque) gereinigt werden sollen. Von besonderer Bedeutung sind weiterhin Oberflächen von Gegenständen, die im Folgenden auch kurz als Oberflächen bezeichnet werden. Oberflächen sollen in vielen Fällen ein gefälliges Aussehen gewährleisten, ein durch beispielsweise hartnäckigen Schmutz verunzierte Oberfläche wirkt aber nicht gefällig. Auch Spuren oder dünne Filme von Schmutz sollen vollständig entfernt werden.

Von großer Bedeutung ist es andererseits, glänzende Oberflächen von fettigen, öligen und insbesondere verharzten Rückständen zu reinigen, ohne dass die betreffenden Oberflächen beschädigt werden, zum Beispiel stumpf aussehen. Man verwendet in vielen Fällen abrasiv wirkende Substanzen, beispielsweise Kieselgele, oder abrasiv wirkende Reinigungsmaterialien wie Schwämme, die bei der Entfernung von hartnäckigen Rückständen helfen. Je hartnäckiger der Rückstand, desto stärker abrasiv ist das eingesetzte Reinigungsmittel, beispielsweise der Schwamm, oder das Abrasivum im Reinigungsmittel, und somit auch die Gefahr, die zu reinigende Oberfläche zu schädigen. Bei der Reinigung speziell von Zähnen ist zu beachten, dass das Zahnfleisch nicht geschädigt werden soll, was bei der Verwendung von starken Abrasiva passieren kann und zu

Es bestand also die Aufgabe, Mischungen bereit zu stellen, die zur Körperreinigung und zum Reinigen von Oberflächen, insbesondere von glänzenden Oberflächen geeignet sind und die Nachteile aus dem Stand der Technik vermeiden. Es bestand weiterhin die Aufgabe, ein Verfahren zur Reinigung von Oberflächen bereit zu stellen, das die Nachteile aus dem Stand der Technik vermeidet.

Demgemäß wurden die eingangs definierten Mischungen gefunden, umfassend
(a) 0.1 bis 10 Gew.-% Stücke von offenzelligem Aminoplastschaumstoff mit einem mittleren Durchmesser im Bereich von 50 µm bis 5 mm (Gewichtsmittel)
(b) Wasser,
(c) insgesamt 1 bis 99.8 Gew.-% mindestens ein Tensid und
(d) gegebenenfalls bis 20 Gew.-% eine Öl- oder Fettphase.

Dabei sind die Komponenten (a) bis (d) der erfindungsgemäßen Mischungen wie folgt definiert.

Erfindungsgemäße Mischungen enthalten Stücke von offenzelligen Aminoplastschaumstoff (a). Derartige Stücke haben einen mittleren Durchmesser (Gewichtsmittel) im Bereich von 50 µm bis 5 mm, bevorzugt 75 µm bis 3 mm, besonders bevorzugt 100 µm bis 2 mm.

In erfindungsgemäßen Mischungen enthaltene Stücke von offenzelligem Aminoplastschaumstoff (a) können eine breite oder eine enge Durchmesserverteilung aufweisen. Bildet man den Quotienten aus Durchmesser (Massenmittel) zu Durchmesser (Zahlenmittel), so kann der Quotient beispielsweise im Bereich von 1,1 bis 10, bevorzugt 1,2 bis 3 liegen.

In erfindungsgemäßen Mischungen enthaltene Stücke von offenzelligem Aminoplastschaumstoff (a) können reguläre oder irreguläre Form aufweisen. Beispiele für reguläre Formen sind Würfel, Quader, Kugeln und Ellipsoide. Beispiele für irreguläre Formen sind Granulate, Fetzen und Schnitzel.

In einer Ausführungsform der vorliegenden Erfindung handelt es sich bei Stücken von offenzelligem Aminoplastschaumstoff (a) um solche auf Basis von synthetischem organischen Schaumstoff, beispielsweise aus Harnstoff-Formaldehyd-Harzen, insbesondere Aminoplastschaumstoffen auf Basis von Aminoplast-Formaldehyd-Harzen, ganz besonders bevorzugt Melamin-Formaldehyd-Harzen, wobei Aminoplastschaumstoffe auf Basis von Melamin-Formaldehyd-Harzen auch als Melamin-Schaumstoffe bezeichnet werden.

In einer Ausführungsform der vorliegenden Erfindung handelt es sich bei Stücken von offenzelligem Aminoplastschaumstoff (a) um Aminoplastschaumstoff, bei dem mindestens 50% aller Lamellen offen sind, bevorzugt 60 bis 100% und besonders bevorzugt 65 bis 99,9%, bestimmt nach DIN ISO 4590.

In einer Ausführungsform der vorliegenden Erfindung sind Stücke von offenzelligem Aminoplastschaumstoff (a) aus hartem Aminoplastschaumstoff, das ist im Sinne der vorliegenden Erfindung Aminoplastschaumstoff, der bei einer Stauchung von 40% eine Stauchhärte von 1 kPa oder mehr aufweisen, bestimmt nach DIN 53577.

In einer Ausführungsform der vorliegenden Erfindung sind Stücke von offenzelligem Aminoplastschaumstoff (a) aus Aminoplastschaumstoff, der eine Dichte im Bereich von 5 bis 500 kg/m³ hat, bevorzugt 6 bis 300 kg/m³ und besonders bevorzugt im Bereich von 7 bis 300 kg/m³.

In erfindungsgemäßen Mischungen enthaltene Stücke von offenzelligem Aminoplastschaumstoff (a) können einen mittleren Porendurchmesser (Zahlenmittel) im Bereich von 1 µm bis 1 mm aufweisen, bevorzugt 50 bis 500 µm, bestimmt durch Auswertung mikroskopischer Aufnahmen an Schnitten.

In erfindungsgemäßen Mischungen enthaltene Stücke von offenzelligem Aminoplastschaumstoff (a) können in einer Ausführungsform der vorliegenden Erfindung aus Aminoplastschaumstoff sei, der maximal 20, bevorzugt maximal 15 und besonders bevorzugt maximal 10 Poren pro m² aufweist, die einen Durchmesser im Bereich von bis zu 20 mm haben. Die übrigen Poren haben üblicherweise einen geringeren Durchmesser.

In einer Ausführungsform der vorliegenden Erfindung weisen in erfindungsgemäßen Mischungen enthaltene Stücke von offenzelligem Aminoplastschaumstoff (a) eine BET-Oberfläche im Bereich von 0,1 bis 50 m²/g auf, bevorzugt 0,5 bis 20 m²/g, bestimmt nach DIN 66131.

In einer Ausführungsform der vorliegenden Erfindung sind erfindungsgemäßen Mischungen enthaltene Stücke von offenzelligem Aminoplastschaumstoff (a) aus Aminoplastschaumstoff, der einen Schallabsorptionsgrad von über 50 % aufweist, gemessen nach DIN 52215 bei einer Frequenz von 2000 Hz und einer Schichtdicke des betreffenden Schaumstoffs (a) von 50 mm.

In einer speziellen Ausführungsform der vorliegenden Erfindung sind in erfindungsgemäßen Mischungen enthaltene Stücke von offenzelligem Aminoplastschaumstoff (a) aus Aminoplastschaumstoff, der einen Schallabsorptionsgrad von über 0,5 aufweist, gemessen nach DIN 52212 bei einer Frequenz von 2000 Hz und einer Schichtdicke des betreffenden Schaumstoffs (a) von 40 mm.

In erfindungsgemäßen Mischungen enthaltene Stücke von offenzelligem Aminoplastschaumstoff (a) kann man aus Aminoplastschaumstoff beispielsweise durch Zerkleinern erhalten. Geeignete Zerkleinerungsverfahren sind insbesondere mechanische Zerkleinerungsverfahren wie beispielsweise Gießen, Stanzen, Schneiden, Schnitzeln, Rupfen, Sägen, Mahlen, Kollern, Scheren.

Besonders geeignete Vorrichtungen zum mechanischen Zerkleinern von Aminoplastschaumstoff sind Mühlen, Fräsen, Häcksler, Reiben, Backenbrecher und Mörser.

In einer Ausführungsform der vorliegenden Erfindung stellt man Stücke von offenzelligem Aminoplastschaumstoff (a) aus Aminoplastschaumstoff mit einer Dichte im Bereich von 5 bis 500 kg/m³ und einem mittleren Porendurchmesser im Bereich von 1 µm bis 1 mm durch mechanisches Zerkleinern her.

Als Ausgangsmaterial zur Durchführung des erfindungsgemäßen Verfahrens besonders geeignete Melamin-Schaumstoffe sind als solche bekannt. Ihre Herstellung gelingt beispielsweise durch Verschäumung von
i) einem Melamin-Formaldehyd-Vorkondensat, das neben Formaldehyd weitere Carbonylverbindungen wie beispielsweise Aldehyde einkondensiert enthalten kann, in Gegenwart von
ii) einem oder mehreren Treibmitteln,
iii) gegebenenfalls einem oder mehreren Emulgatoren,
iv) einem oder mehreren Härtern.

Melamin-Formaldehyd-Vorkondensate i) können unmodifiziert sein, sie können aber auch modifiziert sein, beispielsweise können bis zu 20 mol-% des Melamins durch andere an sich bekannte Durolastbildner ersetzt sein, beispielsweise alkylsubstituiertes Melamin, Harnstoff, Urethan, Carbonsäureamide, Dicyandiamid, Guanidin, Sulfurylamid, Sulfonsäureamide, aliphatische Amine, Phenol und Phenolderivate. Als weitere Carbonylverbindungen neben Formaldehyd können modifizierte Melamin-Formaldehyd-Vorkondensate beispielsweise Acetaldehyd, Trimethylolacetaldehy, Acrolein, Furfurol, Glyoxal, Phthaldialdehyd und Terephthaldialdehyd einkondensiert enthalten.

Als Treibmittel ii) sind geeignet: Wasser, inerte Gase, insbesondere Kohlendioxid, und sogenannte physikalische Treibmittel. Bei physikalischen Treibmitteln handelt es sich um gegenüber den Einsatzkomponenten inerte Verbindungen, die vorzugsweise bei Raumtemperatur flüssig sind und bei den Bedingungen der Aminoplastbildung verdampfen. Vorzugsweise liegt der Siedepunkt dieser Verbindungen unter 110°C, insbesondere unter 80 °C. Zu den physikalischen Treibmitteln zählen auch inerte Gase, die in die Einsatzkomponenten i) und ii) eingebracht bzw. in ihnen gelöst werden, beispielsweise Kohlendioxid, Stickstoff oder Edelgase.

Geeignete bei Raumtemperatur flüssigen Verbindungen werden ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt: Propan, n-Butan, iso- und Cyclobutan, n-, iso- und Cyclopentan, Cyclohexan, Dimethylether, Methylethylether, Methyl-tert.-butylether, Ameisensäuremethylester, Aceton sowie fluorierte Alkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, 1,1,1-Trifluor-2,2,2-trichlorethan, 1,1,2-Trifluor-1,2,2-trichlorethan, Difluorethane und Heptafluorpropan. Die genannten physikalischen Treibmittel können allein oder in beliebigen Kombinationen untereinander eingesetzt werden.

Der Einsatz von Perfluoralkanen zur Erzeugung feiner Zellen ist aus EP-A 0 351 614 bekannt.

Als Emulgatoren iii) kann man übliche nicht-ionogene, anionische, kationische oder betainische Tenside einsetzen, insbesondere C₁₂-C₃₀-Alkylsulfonate, bevorzugt C₁₂-C₁₈-Alkylsulfonate und mehrfach ethoxylierte C₁₀-C₂₀-Alkylalkohole, insbesondere der Formel R¹-O(CH₂-CH₂-O)ₓ-H, wobei R¹ gewählt wird aus C₁₀-C₂₀-Alkyl und x beispielsweise eine ganze Zahl im Bereich von 5 bis 100 bedeuten kann.

Als Härter iv) kommen insbesondere saure Verbindungen in Frage, wie beispielsweise anorganische Br⌀nstedsäuren, z.B. Schwefelsäure oder Phosphorsäure, organische Br⌀nstedsäuren wie beispielsweise Essigsäure oder Ameisensäure, Lewissäuren und auch sogenannte latente Säuren.

Beispiele für geeignete Melamin-Schaumstoffe und Verfahren zu ihrer Herstellung finden sich in EP-A 0 017 672.

Natürlich kann Aminoplastschaumstoff Additive und Zuschlagstoffe enthalten, die in der Schaumstoffchemie üblich sind, beispielsweise Antioxidantien, Flammschutzmittel, Füllstoffe, Farbmittel wie beispielsweise Pigmente oder Farbstoffe und Biozide, beispielsweise

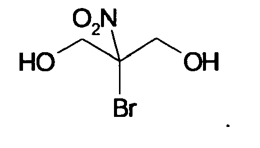

Stücke von Aminoplastschaumstoff (a) können eine reguläre Form aufweisen, beispielsweise sphärisch oder ellipsoid, oder im wesentlichen eine irreguläre Form.

Erfindungsgemäße Mischungen enthalten weiterhin Wasser (b), das entsalzt oder salzhaltig sein kann.

Erfindungsgemäße Mischungen enthalten weiterhin mindestens ein Tensid (c). Tenside (c) sind gewählt aus ionischen, zwitterionischen und vorzugsweise nichtionischen Tensiden. Bei ionischen Tensiden kann es sich um kationische oder anionische Tenside handeln.

In einer Ausführungsform der vorliegenden Erfindung wählt man Tensid (c) aus nicht-toxischen Tensiden.

Unter Salzen sollen im Zusammenhang mit anionischen Tensiden bevorzugt Magnesium-, Ammonium- und Alkalimetallsalze, insbesondere Kalium- und Natriumsalze verstanden werden. Bevorzugte Ammoniumsalze sind beispielsweise Triethanolammoniumsalze und Salze von unsubstituiertem Ammoniak.

Beispiele für anionische Tenside sind Acylaminosäuren und deren Salze, beispielsweise
- Acylglutamate, insbesondere Natriumacylglutamate, wobei Acyl beispielsweise Acetyl, Butyryl, Myristoyl, Lauroyl oder Cocoyl sein kann,
- Sarcosinate, beispielsweise Myristoyl-Sarcosin, Lauroyl-Sarcosinat Triethanolammoniumsalz, Natriumlauroylsarcosinat und Natriumcocoylsarkosinat.

Weitere Beispiele für anionische Tenside sind Sulfonsäuren und deren Salze, beispielsweise
- Acylisethionate, wobei Acyl beispielsweise Acetyl, Butyryl, Myristoyl, Lauroyl oder Cocoyl sein kann, beispielsweise Natrium- oder Ammoniumcocoylisethionat,
- Sulfosuccinate, beispielsweise Dioctylnatriumsulfosuccinat, Dinatriumlaurethsulfosuccinat, Dinatriumlaurylsulfosuccinat und Dinatriumundecylenamido MEA-Sulfosuccinat, Dinatrium PEG-5 Laurylcitratsulfosuccinat und Derivate,
sowie Schwefelsäurehalbester, wie
- Alkylethersulfat, beispielsweise Natrium-, Ammonium-, Magnesium-, Monoisopropanolammonium-, Triisopropanolammonium-Laurethsulfat, Natriummyrethsulfat und Natrium C₁₂₋₁₃ Parethsulfat,
- Alkylsulfate, beispielsweise Natrium-, Ammonium- und Triethanolammoniumsalze des-Laurylsulfats.

Weitere vorteilhafte anionische Tenside sind
- Taurate, beispielsweise Natriumlauroyltaurat und Natriummethylcocoyltaurat,
- Ether-Carbonsäuren, beispielsweise Natriumlaureth-13 Carboxylat und Natrium PEG-6 Cocamide Carboxylat, Natrium PEG-7-Olivenöl-Carboxylat,
- Phosphorsäureester und Salze, wie beispielsweise DEA-Oleth-10 Phosphat und Dilaureth-4 Phosphat,
- substituierte Alkylsulfonate, beispielsweise Natriumcocosmonoglyceridsulfat, Natrium C₁₂-C₁₄-α-Olefinsulfonat, Natriumlaurylsulfoacetat und Magnesium PEG-3 Cocamidsulfat,
- Acylglutamate wie Di-TEA-palmitoylaspartat und Natrium Caprylic/Capric Glutamat,
- Acylpeptide, beispielsweise Palmitoyl hydrolysiertes Milchprotein, Natrium Cocoyl hydrolysiertes Sojaprotein und Natrium-/Kalium Cocoyl hydrolysiertes Kollagen (durch Cocoylpeptid zersetztes Kollagen).

Dabei steht im Rahmen der vorliegenden Erfindung TEA für das Triethanolammoniumsalz und DEA für das Diethanolammoniumsalz. Weiterhin steht im Rahmen der vorliegenden Erfindung PEG jeweils für Polyethylenglykol, die anschließende Zahl jeweils für die mittlere Anzahl von Ethylenoxideinheiten pro Molekül.

Weitere vorteilhafte anionische Tenside sind Carbonsäuren und Derivate, beispielsweise Salze oder Ester,
- Insbesondere Laurinsäure, Aluminiumstearat, Magnesium-C₁-C₁₀-alkanolat und Zinkundecylenat, Ester-Carbonsäuren, beispielsweise Calciumstearoyllactylat, Laureth-6 Citrat und Natrium PEG-4 Lauramidester,
- Alkylarylsulfonate, beispielsweise der Formel R²-Ar-SO₃M¹, wobei R² vorzugsweise für unverzweigtes C₁₀-C₁₃-Alkyl, Ar beispielsweise für Phenylen oder Naphthylen, insbesondere para-Phenylen oder 1,5-Naphthylen und M¹ für einwertige Kationen und insbesondere Natriumkationen steht.

Bevorzugte kationische Tenside im Sinne der vorliegenden Erfindung sind quaternäre Tenside. Quaternäre Tenside enthalten mindestens ein N-Atom, das mit 4 gleichen oder verschiedenen organischen nichtionischen Resten, beispielsweise C₁-C₃₀-Alkyl- oder C₆-C₁₄-Arylgruppen, kovalent verbunden ist.

Vorteilhafte kationische Tenside im Sinne der vorliegenden Erfindung sind ferner
- C₁₀-C₃₀-Alkylamine,
- C₁-C₃₀-Alkylimidazole,
- ein oder mehrfach, insbesondere ein- bis zehnfach ethoxylierte C₁₀-C₃₀-Alkylamine, beispielsweise Kokosfettamin,
- und insbesondere deren Salze, insbesondere Halogenide wie beispielsweise Chlorid und Bromid.

Beispiele für vorteilhafte zwitterionische Tenside sind
- C₁-C₂₀-Acyl-/di-C₁-C₃₀-alkylethylendiamine, beispielsweise Natrium-C₁-C₂₀-acylamphoacetat, Dinatrium-C₁-C₂₀-acylamphodipropionat, Dinatrium-C₁-C₃₀-alkylamphodiacetat, bevorzugt Dinatrium-C₁₀-C₂₅-alkylamphodiacetat, Natrium-C₁-C₂₀-acylamphohydroxypropylsulfonat, Dinatrium-C₁-C₂₀-acylamphodiacetat, Natrium-C₁-C₂₀-acylamphopropionat, und N-Kokosfettsäureamidoethyl-N-hydroxyethylglycinat Natriumsalze,
- N-C₁-C₃₀-Alkylaminosäuren, bevorzugt N-C₁₀-C₂₅-Alkylaminosäuren, beispielsweise Aminopropyl-C₁-C₃₀-alkylglutamid, bevorzugt Aminopropyl-C₁₀-C₂₅-alkylglutamid, N-C₁-C₃₀-Alkylaminopropionsäure, bevorzugt N-C₁₀-C₂₅-Alkylaminopropionsäure, Natrium-C₁-C₃₀-alkylimidodipropionat, bevorzugt Natrium-C₁₀-C₂₅-alkylimidodipropionat und Lauroamphocarboxyglycinat.
- C₁-C₂₀-Alkylbetain, C₁-C₂₀-Alkylamidopropylbetain und C₁-C₂₀-Alkylamidopropylhydroxysultain.

Beispiele für vorteilhafte nicht-ionische Tenside sind
- Alkanolamide, beispielsweise Mono- oder Di-ω-C₂-C₄-Alkanol-C₁-C₃₀-Carbonsäureamide wie Cocamide MEA/DEA/MIPA,
- Ester, die durch Veresterung von C₂-C₃₀-Carbonsäuren mit Glycerin, Sorbitan oder anderen Alkoholen oder mit Ethylenoxid entstehen,
- beispielsweise ein- oder mehrfach ethoxylierte C₂-C₃₀-Alkohole, insbesondere 3 bis 80-fach ethoxylierte C₂-C₃₀-Alkanole, ethoxyliertes Lanolin, ethoxylierte Polysiloxane, propoxylierte POE Ether, Alkylpolyglycoside wie Laurylglucosid, n-Decylglycosid und Cocoglycosid, Glycoside mit einem HLB-Wert von wenigstens 20 (z.B. Belsil^{®}SPG 128V (Wacker).

Weitere vorteilhafte nicht-ionische Tenside sind C₁₂-C₃₀-Alkanole und C₁₂-C₃₀-Aminoxide, wie Cocoamidopropylamin-N-oxid.

In einer Ausführungsform der vorliegenden Erfindung hat in erfindungsgemäßen Mischungen enthaltenes Tensid (c) oder mindestens ein in erfindungsgemäßen Mischungen enthaltenes Tensid (c) einen HLB-Wert von mehr als 25, bevorzugt einen HLB-Wert von mehr als 35. Unter HLB-Wert soll dabei der HLB-Wert nach W. C. Griffin verstanden werden, d. h. das 20-fache des Massenanteils an Ethylenoxid (EO), Propylenoxid (PO), Glycerin oder Sorbitan im jeweiligen Tensidmolekül verstanden werden.

Weitere geeignete Tenside (c) sind mehrfach, insbesondere 3 bis 50-fach ethoxylierte Mono-, Di- oder Trifettsäureester von Sorbitan, sogenannte Polysorbate, beispielsweise
- Polyoxyethylen(20)sorbitanmonolaurat (Tween 20, CAS-Nr. 9005-64-5)
- Polyoxyethylen(4)sorbitanmonolaurat (Tween 21, CAS-Nr. 9005-64-5)
- Polyoxyethylen(4)sorbitanmonostearat (Tween 61, CAS-Nr. 9005-67-8)
- Polyoxyethylen(20)sorbitantristearat (Tween 65, CAS-Nr. 9005-71 -4)
- Polyoxyethylen(20)sorbitanmonooleat (Tween 80, CAS-Nr. 9005-65-6)
- Polyoxyethylen(5)sorbitanmonooleat (Tween 81, CAS-Nr. 9005-65-5)
- Polyoxyethylen(20)sorbitantrioleat (Tween 85, CAS-Nr. 9005-70-3).

Besonders geeignete Tenside (c) sind:
- Polyoxyethylen(20)sorbitanmonopalmitat (Tween 40, CAS-Nr. 9005-66-7)
- Polyoxyethylen(20)sorbitanmonostearat (Tween 60, CAS-Nr. 9005-67-8).

In erfindungsgemäßen Mischungen können ein oder auch mehrere verschiedene Tenside (c) enthalten sein, wobei beispielsweise Gemische von alkoxylierten Fettalkoholen, wie sie in der Synthese üblicherweise anfallen und in denen sich beispielsweise die einzelnen Moleküle lediglich geringfügig im Alkoxylierungsgrad unterscheiden, im Rahmen der vorliegenden Erfindung als ein Tensid (c) zu werten ist.

Erfindungsgemäße Mischungen können weiterhin eine Öl- oder Fettphase (d) enthalten. Die Öl- oder Fettphase (d) kann beispielsweise durch ein oder mehrere natürliche oder synthetische Öl, Fette oder Wachse gebildet werden.

In einer Ausführungsform der vorliegenden Erfindung setzt sich die Öl- oder Fettphase (d) aus einem oder vorzugsweise mehreren Bestandteilen zusammen, die im Folgenden aufgeführt sind.

Bestandteile der Öl- und/oder Fettphase (d) kann man beispielsweise wählen aus der Gruppe der Lecithine und der Fettsäuretriglyceride, z. B. der Triglycerinester gesättigter und/oder ungesättigter, verzweigter und/oder unverzweigter Alkancarbonsäuren einer Kettenlänge von 8 bis 24, insbesondere 12 bis 18 C-Atomen. Fettsäuretriglyceride können beispielsweise vorteilhaft gewählt werden aus der Gruppe der synthetischen, halbsynthetischen und natürlichen Öle, wie z.B. Olivenöl, Sonnenblumenöl, Sojaöl, Erdnussöl, Rapsöl, Mandelöl, Palmöl, Kokosöl, Rizinusöl, Weizenkeimöl, Traubenkernöl, Distelöl, Nachtkerzenöl und Macadamianussöl.

Weitere Bestandteile der Öl- und/oder Fettphase (d) können gewählt werden aus der Gruppe der Ester aus gesättigten und/oder ungesättigten, verzweigten und/oder unverzweigten Alkancarbonsäuren einer Kettenlänge von 3 bis 30 C-Atomen und gesättigten und/oder ungesättigten, verzweigten und/oder unverzweigten Alkoholen einer Kettenlänge von 3 bis 30 C-Atomen sowie aus der Gruppe der Ester aus aromatischen Carbonsäuren und gesättigten und/oder ungesättigten, verzweigten und/oder unverzweigten Alkoholen einer Kettenlänge von 3 bis 30 C-Atomen. Bevorzugte Beispiele sind Isopropylmyristat, Isopropylpalmitat, Isopropylstearat, Isopropyloleat, n-Butylstearat, n-Hexyllaurat, n-Decyloleat, Isooctylstearat, Isononylstearat, Isononylisononanoat, 2-Ethylhexylpalmitat, 2-Ethylhexyllaurat, 2-Hexyldecylstearat, 2-Octyldodecylpalmitat, Oleyloleat, Oleylerucat, Erucyloleat, Erucylerucat Dicaprylyl Carbonat (Cetiol CC) und Cocoglyceride (beispielsweise Myritol 331), Butylenglykoldicaprylat/Dicaprat und Di-n-butyladipat sowie synthetische, halbsynthetische und natürliche Gemische solcher Ester, wie z.B. Jojobaöl.

Weitere Bestandteile der Öl- oder Fettphase (d) können gewählt werden aus der Gruppe der verzweigten und unverzweigten Kohlenwasserstoffe und -wachse, der Silkonöle, der Di-C₅-C₂₀-alkylether, der Gruppe der gesättigten oder ungesättigten, verzweigten oder unverzweigten C₁₂-C₃₀-Alkohole, die auch Tensidfunktion übernehmen können.

Auch beliebige Abmischungen vorstehend genannter Bestandteile kann man als Öl- oder Fettphase (d) in erfindungsgemäßen Mischungen einsetzen.

Es kann vorteilhaft sein, Wachse, beispielsweise Cetylpalmitat, als alleinige Lipidkomponente der Ölphase einzusetzen.

Bevorzugte Bestandteile der Öl- oder Fettphase (d) sind gewählt aus der Gruppe 2-Ethylhexylisostearat, Octyldodecanol, Isotridecylisononanoat, Isoeicosan, 2-Ethylhexylcocoat, C₁₂-C₁₅-Alkylbenzoat, Capryl-Caprinsäure-triglycerid, Dicaprylylether.

Beispiele für bevorzugte Abmischungen von Bestandteilen der Öl- oder Fettphase (d) sind gewählt aus Abmischungen von C₁₂-C₁₅-Alkylbenzoat und 2-Ethylhexylisostearat, Abmischungen von C₁₂-C₁₅-Alkylbenzoat und Isotridecylisononanoat sowie Abmischungen von C₁₂-C₁₅-Alkylbenzoat, 2-Ethylhexylisostearat und/oder Isotridecylisononanoat.

Erfindungsgemäß besonders bevorzugt werden als Öle mit einer Polarität von 5 bis 50 mN/m Fettsäuretriglyceride, insbesondere Sojaöl und/oder Mandelöl eingesetzt.

Aus der Gruppe der Kohlenwasserstoffe kann man beispielsweise Paraffinöl, Squalan, Squalen und insbesondere gegebenenfalls hydrierte Polyisobutene als Öl- oder Fettphase (d) verwenden.

In einer Ausführungsform der vorliegenden Erfindung kann die Öl- oder Fettphase (d) gewählt werden aus Guerbetalkoholen. Guerbetalkohole als solche sind bekannt und beispielsweise erhältlich durch Erhitzen von zwei Äquivalenten Alkohol der allgemeinen Formel R²-CH₂-CH₂-OH in Anwesenheit von beispielsweise Na und/oder Cu zu Alkoholen der Formel R²-CH₂-CH₂-CHR²-CH₂-OH. Dabei steht R² für C₂-C₂₀-Alkyl, verzweigt oder vorzugsweise unverzweigt, insbesondere für unverzweigtes C₃-C₁₄-Alkyl, beispielsweise jeweils unverzweigtes Propyl, Butyl, Pentyl, Hexyl, Heptyl, Octyl, Nonyl, Decyl, Undecyl, Dodecyl, Tridecyl oder Tetradecyl. Besonders bevorzugt als Öl- oder Fettphase (d) geeignete Guerbetalkohole sind 2-n-Butylactanol (R² = n-C₄H₉) und 2-n-Hexyldecanol (R² = n-C₆H₁₃) und Abmischungen der vorstehend genannten Guerbetalkohole..

In einer Ausführungsform der vorliegenden Erfindung kann die Öl- oder Fettphase (d) gewählt werden aus Polyolefinen, insbesondere Poly-α-Olefinen. Unter den Polyolefinen sind Poly-n-decene bevorzugt.

In einer Ausführungsform der vorliegenden Erfindung kann die Öl- oder Fettphase (d) aus cyclischen oder linearen Silikonölen bestehen oder vorzugsweise cyclische oder lineare Silikonöle enthalten.

Silikonöle sind in der Regel bei Zimmertemperatur flüssige Silikone und vorzugsweise durch die folgende allgemeine Formel definiert 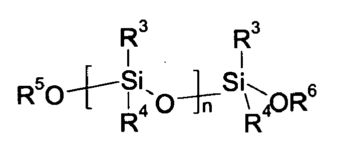 wobei R³, R⁴, R⁵ und R⁶ jeweils gleich oder verschieden sein können und gewählt aus C₁-C₁₀-Alkyl, insbesondere Methyl, oder Phenyl. Die Variable n steht für ganze Zahlen im Bereich von 1 bis 200. In cyclischen Silikonverbindungen sind R⁵ und R⁶ gemeinsam eine (SiR³R⁴)-Gruppe.

Vorteilhaft wird Phenyltrimethicon als Silikonöl gewählt. Auch andere Silikonöle, beispielsweise Dimethicon, Hexamethylcyclotrisiloxan, Phenyldimethicon, Cyclomethicon (z.B. Decamethylcyclopentasiloxan), Hexamethylcyclotrisiloxan, Polydimethylsiloxan, Poly(methylphenylsiloxan), Cetyldimethicon, Behenoxydimethicon kann man als Öl- oder Fettphase (d) verwenden. Vorteilhaft sind ferner Mischungen aus Cyclomethicon und Isotridecylisononanoat, sowie solche aus Cyclomethicon und 2-Ethylhexylisostearat.

In einer Ausführungsform der vorliegenden Erfindung kann man als Silikonöle solche Sllikonverbindungen wählen, deren organische Seitenketten derivatisiert, beispielsweise polyethoxyliert und/oder polypropoxyliert sind. Dazu zählen beispielsweise Polysiloxanpolyalkyl-Polyether-copolymere wie z.B. Cetyl-Dimethicon-Copolyol. Vorteilhaft wird Cyclomethicon (Octamethylcyclotetrasiloxan) als spezielles Silikonöl eingesetzt.

In einer Ausführungsform der vorliegenden Erfindung kann die Öl- oder Fettphase (d) gewählt werden aus der Gruppe der pflanzlichen Wachse, tierischen Wachse, Mineralwachse und petrochemischen Wachse. Vorteilhaft sind beispielsweise Candelillawachs, Carnaubawachs, Japanwachs, Espartograswachs, Korkwachs, Guarumawachs, Reiskeimölwachs, Zuckerrohrwachs, Beerenwachs, Ouricurywachs, Montanwachs, Jojobawachs, Shea Butter, Bienenwachs, Schellackwachs, Walrat, Lanolin (Wollwachs), Bürzelfett, Ceresin, Ozokerit (Erdwachs), Paraffinwachse und Mikrowachse.

In einer Ausführungsform der vorliegenden Erfindung kann die Öl- oder Fettphase (d) gewählt werden aus chemisch modifzierten Wachse und synthetischen Wachsen, beispielsweise Syncrowax^{®}HRC (Glyceryltribehenat) und Syncrowax^{®}AW 1 C (C₁₈-C₃₆-Fettsäure), Montanesterwachsen, Sasolwachsen, hydrierten Jojobawachsen, synthetischen oder modifizierten Bienenwachsen (z. B. Dimethicon Copolyol Bienenwachs und/oder C₃₀-C₅₀-Alkyl-Bienenwachs), Cetyl-Ricinoleaten, Polyalkylenwachsen, insbesondere Polyethylenwachsen, Polyethylenglykolwachsen, chemisch modifzierten Fetten wie z. B. hydrierten Pflanzenölen, beispielsweise hydriertem Ricinusöl und/oder hydrierten Cocosfettglyceriden), hydrierten Triglyceriden wie beispielsweise hydriertem Soy Glycerid, Trihydroxystearin, Fettsäuren, Fettsäureestern und Glykolestern wie beispielsweise C₂₀-C₄₀-Alkylstearat, C₂₀-C₄₀-Alkylhydroxystearoylstearat und/oder Glykolmontanat. Vorteilhaft sind auch bestimmte Organosiliciumverbindungen, die ähnliche physikalische Eigenschaften aufweisen wie die genannten Fett- und/oder Wachskomponenten, wie beispielsweise Stearoxytrimethylsilan.

In einer Ausführungsform der vorliegenden Erfindung kann die Öl- oder Fettphase (d) gewählt werden aus der Gruppe der Phospholipide. Phospholipide sind Phosphorsäureester acylierter Glycerine. Von größter Bedeutung unter den Phosphatidylcholinen sind beispielsweise die Lecithine, welche sich durch die allgemeine Struktur 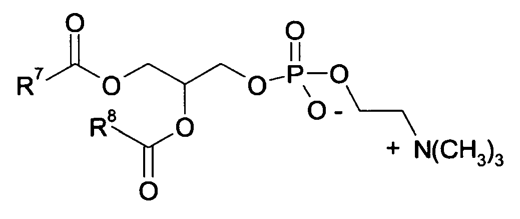 beschreiben lassen, wobei R⁷ und R⁸ gleich oder verschieden sein können und gewählt werden aus unverzweigten aliphatischen oder olefinischen Reste mit 15 oder 17 Kohlenstoffatomen und bis zu 4 cis-Doppelbindungen darstellen.

Erfindungsgemäße Mischungen können weiterhin einen oder mehrere Riech- oder Aromastoffe (e) enthalten.

Geeignete Riechstoffe können Reinsubstanzen oder Mischungen von natürlichen oder synthetischen flüchtigen Verbindungen, die einen Geruch entfalten. Natürliche Riechstoffe sind Extrakte von Blüten (Lilie, Lavendel, Rose, Jasmin, Neroli, Ylang-Ylang), Stengeln und Blättern (Geranium, Patchouli, Petitgrain), Früchten (Anis, Koriander, Kümmel, Wacholder), Fruchtschalen (Bergamotte, Zitrone, Orange), Wurzeln (Macis, Angelica, Sellerie, Kardamon, Costus, Iris, Calmus), Hölzern (Pinien-, Sandel-, Guajak-Zedern-, Rosenholz), Kräutern und Gräsern (Estragon, Lemongras, Salbei, Thymian), Nadeln und Zweigen (Fichte, Tanne, Kiefer, Latschen), Harzen und Balsamen (Galbanum, Elemi, Benzoe, Myrrhe, Olibanum, Opoponax). Weiterhin kommen tierische Rohstoffe in Frage, wie beispielsweise Zibet und Castoreum. Typische synthetische Riechstoffe sind Produkte vom Typ der Ester, Ether, Aldehyde, Ketone, Alkohole und Kohlenwasserstoffe. Riechstoffe vom Typ der Ester sind z.B. Benzylacetat, Phenoxyethylisobutyrat, 4-tert.-Butylcyclohexylacetat, Linalylacetat, Dimethylbenzylcarbinylacetat, Phenylethylacetat, Linalylbenzoat, Benzylformiat, Ethylmethylphenylglycinat, Allylcyclohexylpropionat, Styrallylpropionat und Benzylsalicylat. Zu den Riechstoffen vom Typ der Ether zählen beispielsweise Benzylethylether, zu den den Riechstoffen vom Typ der Aldehyde z.B. lineare Alkanale mit 8 bis 18 Kohlenstoffatomen, Citral, Citronellal, Citronellyloxyacetaldehyd, Cyclamenaldehyd, Hydroxycitronellal, Lilial und Bourgeonat, zu den Riechstoffen vom Typ der Ketone z.B. Jonone, cc-Isomethylionen und Methylcedrylketon, zu den Riechstoffen vom Typ der Alkohole Anethol, Citronellol, Eugenol, Isoeugenol, Geraniol, Linalool, Benzylalkohol, Phenylethylalkohol und Terioneol, zu den den Riechstoffen vom Typ der Kohlenwasserstoffe gehören hauptsächlich die Terpene und Balsame. Bevorzugt werden jedoch Mischungen verschiedener Riechstoffe verwendet, die gemeinsam eine ansprechende Duftnote erzeugen. Auch ätherische Öle geringerer Flüchtigkeit, die meist als Aromakomponenten verwendet werden, eignen sich als Riechstoffe, z.B. Salbeiöl, Kamillenöl, Nelkenöl, Melissenöl, Minzeöl, Zimtblätteröl, Lindenblütenöl, Wacholderbeerenöl, Vetiveröl, Olibanöl, Galbanumöl, Labolanumöl und Lavandinöl. Vorzugsweise werden Bergamotteöl, Dihydromyrcenol, Lilial, Lyral, Citronellol, Phenylethylalkohol, α-Hexylzimtaldehyd, α-Amylzimtaldehyd, Geraniol, Benzylaceton, Cyclamenaldehyd, Linalool, Boisambrene^{®}Forte, Ambroxan, Indol, Hedione, Sandelice, Citronenöl, Mandarinenöl, Orangenöl, Allylamylglycolat, Cyclovertal, Lavandinöl, Muskateller Salbeiöl, β-Damascone, Geraniumöl Bourbon, Cyclohexylsalicylat, Evernyl, Iraldein gamma, Phenylessigsäure, Geranylacetat, Benzylacetat, Rosenoxid, Romillat, Irotyl und Floramat allein oder in Mischungen eingesetzt.

Erfindungsgemäße Mischungen können weiterhin einen oder mehrere Zusätze (f) enthalten. Zusätze (f) können gewählt sein aus Konditionierungsmitteln, Antioxidantien, ethoxylierten Glycerin-mono- oder Difettsäureestern, Verdickungsmitteln, Schaumbildnern, Netz- und Feuchthaltemitteln, Bioziden, organischen Lösungsmitteln wie beispielsweise Ethanol oder Isopropanol, Glitterstoffen und/oder andere Effektstoffen (z.B. Farbschlieren). Glitterstoffe und andere Effektstoffe (z.B. Farbschlieren) sind im Wesentlichen von ästhetischer Bedeutung.

Beispiele für Konditionierungsmittel sind im International Cosmetic Ingredient Dictionary and Handbook (Volume 4, Herausgeber: R. C. Pepe, J.A. Wenninger, G. N. McEwen, The Cosmetic, Toiletry, and Fragrance Association, 9. Auflage, 2002) unter Section 4 unter den Stichworten Hair Conditioning Agents, Humectants, Skin-Conditioning Agents, Skin-Conditioning Agents-Emollient, Skin-Conditioning Agents-Humectant, Skin-Conditioning Agents-Miscellaneous, Skin-Conditioning Agents-Occlusive und Skin Protectans aufgeführt. Weitere Beispiele für Konditionierungsmittel sind in EP-A 0 934 956 (S. 11 bis 13) unter "water soluble conditioning agent" und "oil soluble conditioning agent" aufgeführte Verbindungen. Weitere vorteilhafte Konditionierungsmittel stellen beispielsweise die nach INCI als Polyquaternium bezeichneten Verbindungen dar (insbesondere Polyquaternium-1 bis Polyquaternium-56). Ein ganz besonders bevorzugte Konditioniermittel ist N,N-Dimethyl-N-2-propenyl-2-propenaminium-chlorid (Polyquaternium-7)

Weitere Beispiele für vorteilhafte Konditionierungsmittel sind Cellulosederivate und quaternisierte Guargum Derivate, insbesondere Guar Hydroxypropylammoniumchlorid (z.B. Jaguar Excel^{®}, Jaguar C 162^{®} (Rhodia), CAS 65497-29-2, CAS 39421-75-5) dar.

Auch nichtionische Poly-N-vinylpyrrolidon/Polyvinylacetat-Copolymere (z.B. Luviskol^{®}VA 64 (BASF)), anionische Acrylat-Copolymere (z.B. Luviflex^{®}Soft (BASF)), und/oder amphotere Amid/Acrylat/Methacrylat Copolymere (z.B. Amphomer^{®} (National Starch)) können erfindungsgemäß vorteilhaft als Konditionierer eingesetzt werden. Weitere Beispiele für vorteilhafte Konditionierungsmittel sind quaternisierte Silikone.

Beispiele für ethoxylierte Glycerin-mono- oder Difettsäureester sind PEG-10 Olivenölglyceride, PEG-11 Avocadoölglyceride, PEG-11 Kakaobutterglyceride, PEG-13 Sonnenblumenölglyceride, PEG-15 Glycerylisostearat, PEG-9 Kokosfettsäureglyceride, PEG-54 Hydriertes Ricinusöl, PEG-7 Hydriertes Ricinusöl, PEG-60 Hydriertes Ricinusöl, Jojobaöl Ethoxylat (PEG-26 Jojoba-Fett-Säuren, PEG-26 Jojobaalkohol), Glycereth-5 Cocoat, PEG-9 Kokosfettsäureglyceride, PEG-7 Glycerylcocoat, PEG-45 Palmkemölglyceride, PEG-35 Ricinusöl, Olivenöl-PEG-7 Ester, PEG-6 Caprylisäure/Caprinsäureglyceride, PEG-10 Olivenölglyceride, PEG-13 Sonnenblumenölglyceride, PEG-7 Hydriertes Ricinusöl, Hydrierte Palmkernölglycerid-PEG-6 Ester, PEG-20 Maisölglyceride, PEG- 18 Glycerylolead-cocoat, PEG-40 Hydriertes Ricinusöl, PEG-40 Ricinusöl, PEG-60 Hydriertes Ricinusöl, PEG-60 Maisölglyceride, PEG-54 Hydriertes Ricinusöl, PEG-45 Palmkernölglyceride, PEG-80 Glycerylcocoat, PEG-60 Mandelölglyceride, PEG-60 "Evening Primrose" Glyceride, PEG-200 Hydriertes Glycerylpalmat, PEG-90 Glycerylisostearat.

Bevorzugte ethoxylierte Glycerin-mono- oder Difettsäureester sind PEG-7 Glycerylcocoat, PEG-9 Kokosglyceride, PEG-40 Hydriertes Rizinusöl, PEG-200 hydriertes Glycerylpalmat.

Ethoxylierte Glycerin-mono- oder Difettsäureester werden in erfindungsgemäßen Mischungen zu verschiedenen Zwecken eingesetzt. Ethoxylierte Glycerin-mono- oder Difettsäureester mit 3 bis 12 Ethylenoxideinheiten pro Molekül dienen als Rückfetter zur Verbesserung des Hautgefühls nach dem Abtrocknen, ethoxylierte Glycerin-mono- oder Difettsäureester mit 30 bis 50 Ethylenoxideinheiten pro Molekül dienen als Lösungsvermittler für unpolare Substanzen wie Riechstoffe. Ethoxylierte Glycerin-mono- oder Difettsäureester mit über 50 Ethylenoxideinheiten pro Molekül werden als Verdicker eingesetzt.

Beispiele für geeignete Antioxidantien sind alle für kosmetische und/oder dermatologische Anwendungen geeigneten oder gebräuchlichen Antioxidantien verwendet werden.

Vorzugsweise wählt man Antioxidantien aus der Gruppe der Aminosäuren (z.B. Glycin, Histidin, Tyrosin, Tryptophan), Imidazolen (z.B. Urocaninsäure), Peptiden wie D,L-Carnosin, D-Carnosin, L-Carnosin und deren Derivaten (z.B. Anserin), Carotinoide, Carotinen (z.B. α-Carotin, β-Carotin, γ-Lycopin), Chlorogensäure und deren Derivaten, Liponsäure und deren Derivaten (z.B. Dihydroliponsäure), Aurothioglucose, Propylthiouracil und andere Thiole (z.B. Thioredoxin, Glutathion, Cystein, Cystin, Cystamin und deren Glycosyl-, N-Acetyl-, Methyl-, Ethyl-, Propyl-, Amyl-, Butyl- und Lauryl-, Palmitoyl-, Oleyl-, γ-Linoleyl-, Cholesteryl- und Glycerylester) sowie deren Salzen, Dilaurylthiodipropionat, Distearylthiodipropionat, Thiodipropionsäure und deren Derivaten (Ester, Ether, Peptide, Lipide, Nukleotide, Nukleoside und Salze) sowie Sulfoximinverbindungen (z.B. Buthioninsulfoximine, Homocysteinsulfoximin, Buthioninsulfone, Penta-, Hexa-, Heptathioninsulfoximin) in sehr geringen Dosierungen (z.B. pmol bis µmol/kg erfindungsgemäße Mischung), ferner (Metall)-Chelatoren (z.B. α-Hydroxyfettsäuren, Palmitinsäure, Phytinsäure, Lactoferrin), α-Hydroxysäuren (z. B. Citronensäure, Milchsäure, Apfelsäure), Huminsäure, Gallensäure, Gallenextrakte, Bilirubin, Biliverdin, EDTA, EGTA, ungesättigte Fettsäuren (z.B. γ-Linolensäure, Linolsäure, Ölsäure), Folsäure, Furfurylidensorbitol, Ubichinon und Ubichinol, Vitamin C und Derivate (z.B. Ascorbylpalmitat, Mg-Ascorbylphosphat, Ascorbylacetat), Tocopherole und Derivate (z.B. Vitamin-E-acetat), Vitamin A und Derivate (Vitamin-A-palmitat) sowie Coniferylbenzoat des Benzoeharzes, Rutinsäure und deren Derivate, α-Glycosylrutin, Ferulasäure, Furfurylidenglucitol, Carnosin, Butylhydroxytoluol, Butylhydroxyanisol , Nordihydroguajakharzsäure, Nordihydroguajaretsäure, Trihydroxybutyrophenon, Harnsäure und deren Derivate, Mannose und deren Derivate, Zink und dessen Derivate (z.B. ZnO, ZnSO₄), Selen und dessen Derivate (z.B. Selenmethionin), Stilbene und deren Derivate (z.B. Stilbenoxid, insbesondere trans-Stilbenoxid) und geeignete Derivate (Salze, Ester, Ether, Zucker, Nukleotide, Nukleoside, Peptide und Lipide).

Geeignete Verdickungsmittel für erfindungsgemäße Mischungen sind vernetzte Polyacrylsäuren und deren Derivate, Carrageen, Xanthan, Polysaccharide wie Xanthan-gum, Guar-Guar, Agar-Agar, Alginate oder Tylosen, Cellulosederivate, z. B. Carboxymethylcellulose, Hydroxycarboxymethylcellulose, Hydroxyethylpropylcellulose, Hydroxybutylmethylcellulose, Hydroxypropylmethylcellulose, ferner höhermolekulare Polyethylenglycolmono- und -diester von Fettsäuren, Fettalkohole, Monoglyceride und Fettsäuren, Polyvinylalkohol und Polyvinylpyrrolidon.

Geeignete Verdickungsmittel sind weiterhin beispielsweise hydrophile pyrogene Kieselgele, Polyacrylamide, Polyvinylalkohol und Polyvinylpyrrolidon, Ester von Fettsäuren mit Polyolen wie beispielsweise Pentaerythrit oder Trimethylolpropan, Fettalkoholethoxylate mit enger Homologenverteilung oder C₁-C₂₀-Alkyloligoglucoside sowie Elektrolyte wie Kochsalz und Ammoniumchlorid.

Für erfindungsgemäße Mischungen geeignete Biozide sind Mittel mit spezifischer Wirkung gegen grampositive Bakterien, z.B. Triclosan (2,4,4'-Trichlor-2'-hydroxydiphenylether), Chlorhexidin (1,1'-Hexamethylenbis[5-(4-chlorphenyl)-biguanid) sowie TTC (3,4,4'-Trichlorcarbanilid). Gut geeignete Biozide sind ferner Isothioxalone wie beispielsweise 5-Chlor-2-methyl-3(2H)isothiazolon und 2-Methyl-3(2H)isothiazolon. Quartäre Ammonium-Verbindungen sind prinzipiell ebenfalls geeignet und werden bevorzugt für desinfizierende Seifen und Waschlotionen verwendet. Auch zahlreiche Riechstoffe haben biozide Eigenschaften. Auch eine große Anzahl etherischer Öle bzw. deren charakteristische Inhaltsstoffe wie z.B. Nelkenöl (Eugenol), Minzöl (Menthol) oder Thymianöl (Thymol), zeigen eine ausgeprägte antimikrobielle Wirksamkeit. Weitere geeignete Biozide sind Fluorverbindungen, die beispielsweise zur Kariesprophylaxe geeignet sind wie z. B. NaF, Aminfluoride.

Beispiele für Schaumbildner können beispielsweise vorstehend bezeichnete Tenside (c) sein, insbesondere Natriumlaurysulfat.

Zahlreiche der vorstehend aufgeführten Tenside (c) wirken auch als Netzmittel, besonders bevorzugte Beispiele für Netzmittel sind Alkylbenzolsulfonate der Formel R⁹-C₆H₄-SO₃M¹, wobei M1 wie vorstehend definiert ist und R⁹ einen C₈-C₁₂-Alkylrest bedeutet. Bevorzugte Alkylbenzolsulfonate sind sogenannte LAS (lineare Alkylbenzolsulfonate), die unter Verwendung von linearen C₈-C₁₂-Paraffinen hergestellt wurden.

Beispiele für Feuchthaltemittel sind Sorbitol, Glycerin, Polyethylenglykol beispielsweise mit einem Molekulargewicht Mₙ im Bereich von 200 bis 1000 g/mol.

Erfindungsgemäße Mischungen können weiterhin Farbmittel, beispielsweise Farbstoffe oder Pigmente, Glitterstoffe und/oder andere Effektstoffe (z.B. Farbschlieren) enthalten.

In einer Ausführungsform der vorliegenden Erfindung können erfindungsgemäße Mischungen enthalten:
0,1 bis 10 Gew.-%, bevorzugt 1 bis 5 Gew.-% Stücke von Aminoplastschaumstoff (a), insgesamt 1 bis 99,8 Gew.-%, bevorzugt 10 bis 85 Gew.-% Tensid (c),
0 bis 20 Gew.-%, bevorzugt 1 bis 15 Gew.-% Öl- oder Fettphase (d),
0 bis 10 Gew.-%, bevorzugt 0,1 bis 5 Gew.-% Riech- oder Aromastoff (e),
insgesamt 0 bis 5 Gew.-%, bevorzugt 1 bis 4 Gew.-% Zusätze (f),
wobei Angaben in Gew.-% auf gesamte erfindungsgemäße Mischung bezogen sind, der Rest ist vorzugsweise Wasser (b).

Erfindungsgemäße Mischungen können in einer Ausführungsform ein oder mehrere Antioxidantien im Bereich von insgesamt 0,001 bis 3 Gew.-%, besonders bevorzugt 0,05 bis 2 Gew.-%, insbesondere 0,1 bis 1 Gew.-% enthalten. Falls Vitamin E und/oder dessen Derivate das oder die Antioxidantien darstellen, ist ein Gehalt im Bereich von 0,001 bis 1 Gew.-% bevorzugt. Falls Vitamin A oder Vitamin-A-Derivate oder Carotine das oder die Antioxidantien in erfindungsgemäßen Mischungen sind, ist Gehalt im Bereich von 0,001 bis 1 Gew.-% bevorzugt.

Erfindungsgemäße Mischungen können in einer Ausführungsform der vorliegenden Erfindung Biozid im Bereich von 0,1 bis 0,3 Gew.-% enthalten.

In einer Ausführungsform der vorliegenden Erfindung weisen erfindungsgemäße Mischungen einen pH-Wert im Bereich von 2 bis 12, bevorzugt 3 bis 10 und besonders bevorzugt 5 bis 9 auf. Dabei ist es bevorzugt, wenn solche Mischungen, die man zur Körperreinigung einsetzen möchte, einen pH-Wert im Bereich von 2 bis 12, bevorzugt 4 bis 9, besonders bevorzugt 5 bis 8 aufweisen.

In einer Ausführungsform der vorliegenden Erfindung weisen erfindungsgemäße Mischungen bei 23°C eine dynamische Viskosität im Bereich von 100 bis 100.000 mPa·s auf. Dynamische Viskositäten lassen sich beispielsweise mit einem Brookfield-Viskosimeter bestimmen.

Natürlich können erfindungsgemäße Mischungen ein oder mehrere an sich bekannte Abrasiva enthalten, beispielsweise Kieselgel, Silikat, Bimsstein, Marmor, Polyethylen, Aprikosenschale, Superabsorber. Bevorzugt ist es jedoch, wenn erfindungsgemäße Mischungen keine weiteren Abrasiva enthalten.

Erfindungsgemäße Mischungen sind hervorragend zur Körperreinigung und zum Reinigen von Oberflächen aller Art geeignet. Bei der Anwendung von erfindungsgemäßen Mischungen bei der Körperreinigung, beispielsweise beim Reinigen von stark mit Öl verschmierten Händen, beobachtet man einerseits, dass die betreffenden Körperteile auch ohne große Einwirkung von Kraft gut sauber werden. Andererseits kann man beobachten, dass die Haut geschont wird, die bei der Verwendung von starken Abrasiva häufig beobachtete Hautrötung ist nicht oder in nur sehr stark vermindertem Maße zu beobachten.

Erfindungsgemäße Mischungen kann man beispielsweise als oder zur Herstellung von Reinigungsmitteln, Bade- und Duschgelen, Peelings, Zahnpasten, Handwaschpasten einsetzen bzw. verwenden. Beispiele für Reinigungsmittel sind Allzweckreiniger, Sprühreiniger, Konzentrate für Reiniger, Fenster - und Scheibenreiniger, Autoscheibenreiniger, Autoshampoos, Backofenreiniger, flüssige synthetische Seife, Fußbodenreiniger wie beispielsweise Seifenreiniger und desinfizierende Fußbodenreiniger, Kunstlederreiniger, Kunststoffreiniger, Scheuermittel wie beispielsweise flüssige Scheuermittel und Scheuerpulver, Teppichreiniger wie beispielsweise Schaumreiniger für Teppiche und Sprühextraktionsreiniger, Waschpasten für beispielsweise Textilien.

Erfindungsgemäße Mischungen können beispielsweise das Erscheinungsbild einer leichtviskosen oder hochviskosen Flüssigkeit, einer Paste, einer Reinigungsmilch, eines Gels oder einer Seife, z.B. einer Handseife, haben.

Ein weiterer Gegenstand der vorliegenden Erfindung ist somit die Verwendung von erfindungsgemäßen Mischungen als Reinigungsmittel. Ein weiterer Gegenstand der vorliegenden Erfindung ist ein Verfahren zur Reinigung von Oberflächen unter Verwendung von erfindungsgemäßen Mischungen.

Dabei sind Oberflächen wie in der Einleitung definiert.

In einer besonders bevorzugten Variante der vorliegenden Erfindung handelt es sich bei Oberflächen um solche aus glänzendem Material, beispielsweise Email, Glas, Metallen wie beispielsweise Edelstahl, Kunststoffen, insbesondere glänzenden Kunststoffen, Keramik wie beispielsweise Kacheln, oder Fliesen, Porzellan.

Zur Durchführung des erfindungsgemäßen Verfahrens geht man von verschmutzten Oberflächen aus, die gleichmäßig oder ungleichmäßig, wenig oder stark verschmutzt sein können.

### Zu entfernende Verschmutzungen können beispielsweise sein:

Fetten, Ölen, Wachsen, beispielsweise Polyethylenwachse, Paraffinwachse, Paraffinöle, Esteröle, native Öle und Fette, Schmierfette, Lagerfette, Stauferfette, Montanwachse,
Metallsalze anionischer Tenside wie beispielsweise Kalkseife,
Biofilme, beispielsweise Schimmel oder Pseudomonaten-Biofilme,
Polymere, beispielsweise Lackspritzer, Polyurethanschaum, Silikone (Polysiloxane), Metalloxide, beispielsweise Kupfer-, Blei- oder Nickeloxid oder durch beispielsweise Korrosion entstandenen Rost, oder Rostpartikel oder Flugrost, insbesondere Eisenoxide,
Metallhydroxide und Metallcarbonate, die neutral, sauer oder basisch sein können, insbesondere Eisen-, Kupfer-, Nickelhydroxid, Aluminiumhydroxid, Magnesiumhydroxid, MgCO₃, basisches MgCO₃, CaCO₃, basisches Kupfercarbonat, wobei Metalloxide, Metallcarbonate und Metallhydroxide durch Korrosion aus dem Grundmetall der strukturierten Oberfläche beispielsweise eines Werkzeugs oder Werkstückes entstanden oder aber sekundär abgelagert worden sein können,
Reste von Schmierstoffen, beispielsweise partiell verkokte oder partiell oder vollständig verharzte Schmierstoffe, und gebrochenen Emulsionen. Beispielhaft seien zu nennen: verharzte native Esteröle an z. B. Kettensägen oder verkokte Öle an Heizplatten der Polyester-Filamentfaserspinnerei, weiterhin Schmieröle beispielsweise aus dem Fahrzeugbereich, auch von Auotmobilen oder Fahrrädern,
Ablagerungen und Anbackungen aus z. B. Zement oder Gips,
haushaltsübliche Verschmutzungen wie Hausstaub, auch mit Fetten vermischt, Fett aus dem Küchenbereich, auch in verharzter Form, beispielsweise Bratfett oder Frittieröl.

Weitere Beispiele für zu entfernende Verunreinigungen sind Beschriftungen, beispielsweise mit Kugelschreiber oder Filzstift.

Verunreinigungen können auf zu reinigenden Oberflächen gleichmäßig oder ungleichmäßig verteilt sein, beispielsweise in Form von Flecken, Rändern, Spritzern, oder als Film.

Als Zeitdauer für das erfindungsgemäße Verfahren kann man beispielsweise Zeiträume im Bereich von wenigen Sekunden, beispielsweise 5 Sekunden, bis 24 Stunden wählen, bevorzugt 1 Minute bis 3 Stunden und besonders bevorzugt bis eine Stunde.

Zur Durchführung des erfindungsgemäßen Reinigungsverfahrens kann man beispielsweise so vorgehen, dass man erfindungsgemäße Mischung in unverdünnter oder in verdünnter, insbesondere in mit Wasser verdünnter Form auf der zu reinigenden Oberfläche appliziert.

Zur Durchführung des erfindungsgemäßen Reinigungsverfahrens kann man als Hilfsmittel einen oder mehrere Lappen, Bürsten oder Schwämme einsetzen.

Ein weiterer Gegenstand der vorliegenden Erfindung ist ein Verfahren zur Herstellung von erfindungsgemäßen Mischungen, auch erfindungsgemäßes Herstellverfahren genannt. Zur Durchführung des erfindungsgemäßen Herstellverfahrens kann man so vorgehen, dass man
(a) Stücke von offenzelligem Aminoplastschaumstoff mit einem mittleren Durchmesser im Bereich von 50 µm bis 5 mm (Gewichtsmittel),
(b) Wasser,
(c) mindestens ein Tensid und
(d) gegebenenfalls eine Öl- oder Fettphase
in beliebiger Reihenfolge miteinander vermischt, beispielsweise verrührt. Wünscht man pastenartige erfindungsgemäße Mischungen herzustellen, so vermischt man bevorzugt mit einem Hochgeschwindigkeitsrührer, besonders bevorzugt bei vermindertem Druck, beispielsweise bei 20 bis 100 mbar.

Nach der Durchführung des eigentlichen erfindungsgemäßen Herstellungsverfahrens kann man erfindungsgemäße Mischungen noch konfektionieren, beispielsweise extrudieren oder zu seifenartigen Stücken verarbeiten.

Die Erfindung wird durch Arbeitsbeispiele erläutert.

### I.1 Herstellung von Aminoplastschaumstoff

In einem offenen Gefäß wurde ein sprühgetrocknetes Melamin/Formaldehyd-Vorkondensat (Molverhältnis 1:3, Molekulargewicht etwa 500 g/mol) zu einer wässerigen Lösung mit 3 Gew.-% Ameisensäure und 1,5 % des Natriumsalzes eines Gemisches von Alkylsulfonaten mit 12 bis 18 C-Atomen im Alkylrest (Emulgator K 30 der Fa. Bayer AG), wobei die Prozentzahlen auf das Melamin/Formaldehyd-Vorkondensat bezogen sind, gegeben. Die Konzentration des Melamin/Formaldehyd-Vorkondensats, bezogen auf die gesamte Mischung aus Melamin/Formaldehyd-Vorkondensat und Wasser, betrug 74 Gew.-%. Die so erhältliche Mischung wurde kräftig gerührt, dann wurden 20 Gew.-% n-Pentan zugegeben. Es wurde so lange (etwa 3 min lang) weitergerührt, bis eine homogen aussehende Dispersion entstand. Diese wurde auf ein teflonisiertes Glasgewebe als Trägermaterial aufgerakelt und in einem Trockenschrank, in dem eine Lufttemperatur von 150°C herrschte, aufgeschäumt und gehärtet. Dabei stellte sich als Massetemperatur im Schaumstoff die Siedetemperatur des n-Pentans ein, die unter diesen Bedingungen bei 37,0°C liegt. Nach 7 bis 8 min war die maximale Steighöhe des Schaumstoffs erreicht. Der Schaumstoff wurde noch weitere 10 min bei 150 °C im Trockenschrank belassen; anschließend wurde er 30 min lang bei 180°C getempert. Man erhielt Aminoplastschaumstoff.

Es wurden am Aminoplastschaumstoff die folgenden Eigenschaften ermittelt:
99,6% offenzellig nach DIN ISO 4590,
Stauchhärte (40%) 1,3 kPa bestimmt nach DIN 53577,
Dichte 7,6 kg/m³ bestimmt nach EN ISO 845,
mittlerer Porendurchmesser 210 µm, bestimmt durch Auswertung mikroskopischer Aufnahmen an Schnitten,
BET-Oberfläche von 6,4 m²/g, bestimmt nach DIN 66131,
Schallabsorption von 93 %, bestimmt nach DIN 52215,
Schallabsorption von mehr als 0,9, bestimmt nach DIN 52212.

### I.2 Herstellung von Aminoplastschaumstoffstücken (a.1) durch Mahlen

Ein Quader aus Aminoplastschaumstoff nach I.1 wurde mit Hilfe einer schlagmesserbetriebenen Laboranalysenmühle (Typ A10) gemahlen und anschließend über ein Rüttelsieb der Maschenweite 250 µm gesiebt. Man erhielt Stücke von offenzelligem Aminoplastschaumstoff (a.1) mit einem mittleren Durchmesser von bis zu 250 µm. Der Siebrückstand wurde verworfen.

### I.3 Herstellung von erfindungsgemäßen Mischungen

### I.3.1 Herstellung eines Reinigungsmittels für den Haushalt, allgemeine Vorschrift

Man vermischte miteinander:
3 g n-C₁₂H₂₅-SO₄Na (c.1)
0,5 g Na-Stearat (c.2)
2 g des Ethoxylierungsprodukts von Oleylcetylalkohol mit 17 Äquivalenten Ethylenoxid (c.3)
2 g des Ethoxylierungsprodukts von n-C₁₈H₃₇-OH mit 7 Äquivalenten Ethylenoxid (c.4)
0,5 g Ethanol
0,2 g einer Mischung von Riechstoffen (e.1) bis (e.5), enthaltend gleiche Gewichtsteile α-Amylzimtaldehyd, α-Hexylzimtaldehyd, 4-n-Butylphenyl-methylpropionaldehyd, 0,1 g Benzylalkohol, Linalool,
1 g Benzalkoniumchlorid (Biozid, (f.1))
und füllte mit Wasser (b) zu 100 g auf.

Man erhielt ein Abrasivum-freies Reinigungsmittel V-R.5, das man in einem 150-ml-Becherglas vorlegte. Anschließend gab man Stücke von offenzelligem Aminoplastschaumstoff (a.1) nach Tabelle 1 mit einem Glasstab zu und verrührte mit dem Glasstab. Man erhielt die erfindungsgemäßen Mischungen R.1 bis R.4 nach Tabelle 1, die auch als erfindungsgemäße Reinigungsmittel R.1 bis R.4 bezeichnet werden. Man überprüfte jeweils das Absetzverhalten und die Reinigungswirkung.

### I.3.2 Herstellung eines Duschgels

Duschgel stellte man durch Vermischen einer sogenannten Tensidphase und einer sogenannten Wasserphase her.

Man vermischte zur Herstellung der Tensidphase miteinander:

| | |
|---|---|
| 3000 g | 28 Gew.-% wässrige Lösung von n-C₁₂H₂₅-(OCH₂CH₂)₃-OSO₃⁻ Na⁺ |
| 600 g | Natriumcocamphoaetat |
| 600 g | Cocoamidopropylbetain |
| 770 g | 13 Gew.-% wässrige Lösung von Polyquaterium-44 [SHBN006] |
| 300 g | Natriumlaurethsulfat |
| 50 g | Parfümöl (Duft: Apfel-Pfirsich) |
| 2000 g | destilliertes Wasser |

Man erhielt eine Tensidphase.

Man vermischte zur Herstellung der Wasserphase miteinander:

| | |
|---|---|
| 100 g | D-Panthenol (D-(+)-2,4-dihydroxy-N-(3-Hydroxypropyl)-3,3-dimethylbutyramid |
| 10g | 3:1 Gemisch (Gewichtsteile) von 5-Chlor-2-methyl-3(2H)isothiazolon und 2-Methyl-3(2H)isothiazolon |
| 30 g | Zitronensäure |
| 100 g | Natriumchlorid |
| 0,15 g | Gelborange 85 E 110 |
| 2440 g | destilliertes Wasser |

Man erhielt eine Wasserphase.

Zur Herstellung eines Abrasivum-freien Duschgels verrührte man miteinander: 73,7 g Tensidphase (s.o.) und 26,7 g Wasserphase. Man erhielt Duschgel V-DG.5.

Zur Herstellung von erfindungsgemäßen Duschgelen legte man 100 g Abrasivum-freies Duschgel V-DG.1 vor. Anschließend gab man Stücke von offenzelligem Aminoplastschaumstoff (a.1) nach Tabelle 2 mit einem Glasstab zu und verrührte mit dem Glasstab. Man erhielt die erfindungsgemäßen Mischungen DG.1 bis DG.4 nach Tabelle 2, die auch als erfindungsgemäße Duschgele DG.1 bis DG.4 bezeichnet werden.
Man überprüfte jeweils das Absetzverhalten und die Reinigungswirkung.

### II.1 Reinigung von Oberflächen

### II.1 Reinigung von Oberflächen mit Reinigungsmitteln für den Haushalt nach Beispiel I.3.1

Zur Überprüfung der Reinigungswirkung ging man von einer verkalkten Edelstahlspüle aus. Man brachte jeweils ein paar Tropfen unverdünntes Reinigungsmittel nach 1.3.1 auf einen feuchten Lappen auf und rieb den Kalk ab. Anschließend wurde die Reinigungswirkung visuell beurteilt.

**Tabelle 1: Zusammensetzung und Reinigungswirkung von erfindungsgemäßen Reinigungsmitteln und Vergleichsreinigungsmitteln**

| Reinigungsmittel | Zusatz (a.1) [g] | Absetzverhalten | Beurteilung der Reinigungswirkung |
|---|---|---|---|
| R.1 | 1 | Setzt sich sofort ab | Gut, keine Kratzer |
| R.2 | 2 | Setzt sich sofort ab | Gut, keine Kratzer |
| R.3 | 5 | Setzt sich sofort ab | Gut, keine Kratzer |
| R.4 | 10 | Setzt sich sofort ab | Gut, keine Kratzer |
| V-R.5 | - | - | Befriedigend, keine Kratzer |
| V-R.6 | - | Setzt sich sofort ab | Gut, aber Spüle verkratzt |

| | | | |
|---|---|---|---|
| V-R.5 war Abrasivum-freies Reinigungsmittel gemäß Beispiel I.3.1 ohne Zugabe eines Abrasivums. V-R.6 entsprach V-R.5, dem man noch 2 g Bimssteinmehl als Abrasivum beigefügt hatte. | | | |

### II.2 Reinigung von mit Schmieröl (Fahrradkette) verschmutzten Händen

Man verschmutzte beide Hände mit Schmieröl (Fahrradkette). Man feuchtete die Hände mit Wasser an. Anschließend gab man mehrere Tropfen von einem der erfindungsgemäßen Duschgele oder einem der Vergleichsduschgele gemäß Tabelle 2 auf die Hand und rieb sich die Hände. Man spülte kurz mit handwarmem Wasser, trocknete sich die Hände mit einem Handtuch ab und beurteilte visuell die Reinigungswirkung.

**Tabelle 2: Zusammensetzung und Reinigungswirkung von erfindungsgemäßen Duschgelen und Vergleichsduschgelen**

| Duschgel | Zusatz (a.1) [g] | Absetzverhalten | Beurteilung der Reinigungswirkung |
|---|---|---|---|
| DG.1 | 1 | Setzt sich sofort ab | Gut, keine Hautrötung |
| DG.2 | 2 | Setzt sich sofort ab | Gut, keine Hautrötung |
| DG.3 | 5 | Setzt sich sofort ab | Gut, keine Hautrötung |
| DG.4 | 10 | Setzt sich sofort ab | Gut, keine Hautrötung |
| V-DG.5 | - | - | mäßig, keine Hautrötung |
| V-R.6 | - | Setzt sich sofort ab | Gut, aber Hautrötung |

| | | | |
|---|---|---|---|
| V-DG.5 war Abrasivum-freies Reinigungsmittel gemäß Beispiel 1.3.2 ohne Zugabe eines Abrasivums. V-DG.6 entsprach V-DG.5, dem man noch 2 g Polyethylen als Abrasivum beigefügt hatte. | | | |

## Patentansprüche

1. Mischung, umfassend
(a) 0,1 bis 10 Gew.-% Stücke von offenzelligem Aminoplastschaumstoff mit einem mittleren Durchmesser im Bereich von 50 µm bis 5 mm (Gewichtsmittel),
(b) Wasser,
(c) insgesamt 1 bis 99,8 Gew.-% mindestens ein Tensid und
(d) gegebenenfalls bis 20 Gew.-% einer Öl- oder Fettphase,
wobei die Angaben in Gew.-% auf die gesamte Mischung bezogen sind.

2. Mischung nach Anspruch 1, **dadurch gekennzeichnet, dass** man Tensid (c) wählt aus nicht-toxischen Tensiden.

3. Mischung nach Anspruch 1 oder 2, **dadurch gekennzeichnet, dass** die Mischung bei 23°C eine dynamische Viskosität im Bereich von 100 bis 100.000 mPa·s aufweist.

4. Mischung nach einem der Ansprüche 1 bis 3, **dadurch gekennzeichnet, dass** man Stücke von offenzelligem Aminoplastschaumstoff (a) aus Aminoplastschaumstoff mit einer Dichte im Bereich von 5 bis 500 kg/m³ und einem mittleren Porendurchmesser im Bereich von 1 µm bis 1 mm durch mechanisches Zerkleinern herstellt.

5. Mischung nach einem der Ansprüche 1 bis 4, **dadurch gekennzeichnet, dass** sie zusätzlich bis 10 Gew.-% mindestens einen Riech- oder Aromastoff (e) enthält.

6. Verfahren zum Reinigen von Oberflächen unter Verwendung von mindestens einer Mischung nach einem der Ansprüche 1 bis 5 als Reinigungsmittel.

7. Verfahren nach Anspruch 6, **dadurch gekennzeichnet, dass** es sich bei Oberflächen um Oberflächen aus glänzendem Material handelt.

8. Verwendung von Mischungen nach einem der Ansprüche 1 bis 5 als Reinigungsmittel oder Duschgel.

9. Verfahren zur Herstellung von Mischungen nach einem der Ansprüche 1 bis 5, **dadurch gekennzeichnet, dass** man
(a) Stücke von offenzelligem Aminoplastschaumstoff mit einem mittleren Durchmesser im Bereich von 50 µm bis 5 mm (Gewichtsmittel),
(b) Wasser,
(c) mindestens ein Tensid und
(d) gegebenenfalls eine Öl- oder Fettphase
miteinander vermischt.

10. Verfahren nach Anspruch 9, **dadurch gekennzeichnet, dass** man es in mehreren Stufen durchführt.

## Claims

1. A mixture comprising
(a) 0.1 to 10% by weight of pieces of open-cell aminoplastic foam with an average diameter in the range from 50 µm to 5 mm (weight-average),
(b) water,
(c) a total of 1 to 99.8% by weight of at least one surfactant and
(d) if appropriate up to 20% by weight of an oil or fat phase,
where the data in % by weight are based on the total mixture.

2. The mixture according to claim 1, wherein surfactant (c) is chosen from nontoxic surfactants.

3. The mixture according to claim 1 or 2, wherein the mixture has a dynamic viscosity in the range from 100 to 100 000 mPa.s at 23°C.

4. The mixture according to one of claims 1 to 3, wherein pieces of open-cell aminoplastic foam (a) are prepared from aminoplastic foam with a density in the range from 5 to 500 kg/m³ and an average pore diameter in the range from 1 µm to 1 mm by mechanical comminution.

5. The mixture according to one of claims 1 to 4, which additionally comprises up to 10% by weight of at least one fragrance or aroma substance (e).

6. A method of cleaning surfaces using at least one mixture according to one of claims 1 to 5 as cleaner.

7. The method according to claim 6, wherein the surfaces are surfaces made of shiny material.

8. The use of mixtures according to one of claims 1 to 5 as cleaner or shower gel.

9. A method of producing mixtures according to one of claims 1 to 5, wherein
(a) pieces of open-cell aminoplastic foam with an average diameter in the range from 50 µm to 5 mm (weight-average),
(b) water,
(c) at least one surfactant and
(d) if appropriate an oil or fat phase
are mixed together.

10. The method according to claim 9, which is carried out in a plurality of stages.

## Revendications

1. Mélange comprenant
(a) 0,1 à 10 % en poids de fragments de mousse aminoplaste à cellules ouvertes, ayant un diamètre moyen dans la plage de 50 µm à 5 mm (moyenne en poids),
(b) de l'eau,
(c) au total 1 à 99,8 % en poids d'au moins un tensioactif et
(d) éventuellement jusqu'à 20 % en poids d'une phase huileuse ou de graisse,
les données en % en poids se rapportant au mélange total.

2. Mélange selon la revendication 1, **caractérisé en ce qu'**on choisit le tensioactif (c) parmi des tensioactifs non ioniques.

3. Mélange selon la revendication 1 ou 2, **caractérisé en ce que** le mélange présente à 23 °C une viscosité dynamique dans la plage de 100 à 100 000 mPa.s.

4. Mélange selon l'une quelconque des revendications 1 à 3, **caractérisé en ce qu'**on prépare des fragments de mousse aminoplaste (a) à cellules ouvertes par fragmentation mécanique à partir d'une mousse aminoplaste (a) ayant une densité dans la plage de 5 à 500 kg/m³ et un diamètre moyen de pore dans la plage de 1 µm à 1 mm.

5. Mélange selon l'une quelconque des revendications 1 à 4, **caractérisé en ce qu'**il contient en outre jusqu'à 10 % en poids d'au moins un parfum ou arôme (e).

6. Procédé pour le nettoyage de surfaces avec utilisation d'au moins un mélange selon l'une quelconque des revendications 1 à 5 en tant que produit de nettoyage.

7. Procédé selon la revendication 6, **caractérisé en ce que** les surfaces consistent en des surfaces de matériau brillant.

8. Utilisation de mélanges selon l'une quelconque des revendications 1 à 5 en tant que produit de nettoyage ou gel douche.

9. Procédé pour la préparation de mélanges selon l'une quelconque des revendications 1 à 5, **caractérisé en ce qu'**on mélange entre eux
(a) des fragments de mousse aminoplaste à cellules ouvertes, ayant un diamètre moyen dans la plage de 50 µm à 5 mm (moyenne en poids),
(b) de l'eau,
(c) au moins un tensioactif et
(d) éventuellement une phase huileuse ou de graisse.

10. Procédé selon la revendication 9, **caractérisé en ce qu'**on l'effectue en plusieurs étapes.
